# EUROPÄISCHE PATENTSCHRIFT

(11) **EP 3 625 809 B1**
(45) Veröffentlichungstag und Bekanntmachung des Hinweises auf die Patenterteilung: **07.06.2023**
(21) Anmeldenummer: 18716226.8
(22) Anmeldetag: 05.04.2018
(51) Int. Cl.: H01F 7/18, B60T 8/36, F02D 41/20, F16K 31/06

(54) **VERFAHREN ZUM UMSCHALTEN EINES MAGNETVENTILS**
METHOD FOR SWITCHING OVER A SOLENOID VALVE
PROCÉDÉ POUR LA COMMUTATION D'UNE ÉLECTROVALVE

(30) Priorität: 17.05.2017 DE 102017208273
(43) Veröffentlichungstag der Anmeldung: 25.03.2020
(73) Patentinhaber: Robert Bosch GmbH, 70442 Stuttgart (DE)
(72) Erfinder: BODENSCHATZ, Dirk, 70180 Stuttgart (DE); LUDEWIG, Erich, 74321 Bietigheim-Bissingen (DE); FOERCH, Dirk, 74196 Neuenstadt/Stein (DE); BENZLER, Steffen, 71735 Eberdingen (DE)
(86) Internationale Anmeldenummer: PCT/EP2018/058679
(87) Internationale Veröffentlichungsnummer: WO 2018/210481

(56) Entgegenhaltungen:
- EP-A1- 2 402 584
- DE-A1-102013 207 162
- DE-A1-102014 220 292

## Beschreibung

### Stand der Technik

Für verschiedenste Anwendungsbereiche sind Ventile bekannt, die durch elektrische Signale schaltbar sind. Insbesondere sind Magnetventile bekannt, die insbesondere durch Veränderung magnetischer Kräfte schaltbar sind. Beim Schalten von Magnetventilen kommt es allerdings regelmäßig zu einer unerwünschten Geräuschentwicklung.

Aus der DE 10 2014 220 292 A1 ist bekannt, dass eine Schließbewegung durch eine Magnetkraftsteuerungseinrichtung beim Abschluss der Schließbewegung zu verlangsamen, um eine Geräuschentwicklung beim Anschlagen eines Kolbens zu vermeiden.

Entsprechendes ist auch in der EP 2 402 584 A1 offenbart. Offenbarung der Erfindung Hier wird ein besonders vorteilhaftes Verfahren zum Umschalten eines Magnetventils nach Anspruch 1 vorgestellt. Die abhängigen Ansprüche geben besonders vorteilhafte Weiterbildungen des Verfahrens an. Weiter werden ein Steuergerät nach Anspruch 11, ein Computerprogramm nach Anspruch 12 und ein maschinenlesbaren Speichermedium nach Anspruch 13 vorgestellt.

Das beschriebene Magnetventil kann insbesondere in einem Bremssystem insbesondere eines Kraftfahrzeugs eingesetzt werden. Es ist aber auch denkbar, dass das beschriebene Magnetventil in einem beliebigen anderen Anwendungsbereich eingesetzt wird.

Das Magnetventil weist einen beweglichen Ventilkörper auf, der zumindest zwischen einer ersten Stellung und einer zweiten Stellung verstellbar ist. Das Magnetventil kann dabei derart konstruiert sein, dass das Magnetventil in der ersten Stellung des Ventilkörpers geschlossen und in der zweiten Stellung des Ventilkörpers geöffnet ist. Genauso ist es aber auch möglich, dass das Magnetventil in der ersten Stellung des Ventilkörpers geöffnet und in der zweiten Stellung des Ventilkörpers geschlossen ist.

Die Einstellung des Magnetventils kann insbesondere über die Stellung des Ventilkörpers beschrieben werden. Eine erste Stellung des Magnetventils entspricht mithin der ersten Stellung des Ventilkörpers und eine zweite Stellung des Magnetventils entspricht der zweiten Stellung des Ventilkörpers. Zwischen der ersten Stellung und der zweiten Stellung des Ventilkörpers (bzw. des Magnetventils) gibt es vorzugsweise, aber nicht notwendigerweise, keine (definierten) Zwischenstellungen. Sind keine Zwischenstellungen vorgesehen, kann das Magnetventil nur (vollständig) geöffnet oder (vollständig) geschlossen vorliegen. Zwischenstellungen liegen nur sehr kurzzeitig beim Umschalten zwischen dem geöffneten Zustand und dem geschlossenen Zustand vor.

Das Magnetventil kann beispielsweise einen Kanal zwischen einem Einlass und einem Auslass aufweisen. An dem Einlass kann ein Medium in den Kanal (und damit in das Magnetventil) einströmen. Der Kanal kann von dem Ventilkörper - je nach Stellung des Ventilkörpers - versperrt oder freigegeben sein. In einer der Stellungen des Magnetventils ist der Kanal freigegeben, so dass das Magnetventil geöffnet ist. In dem Fall kann das Medium durch den Kanal an dem Ventilkörper vorbei zum Auslass und damit aus dem Magnetventil herausströmen. Versperrt der Ventilkörper hingegen den Kanal, ist das Magnetventil geschlossen und das Medium kann nicht aus dem Magnetventil bzw. aus dem Auslass herausströmen.

Der Ventilkörper kann in dem Magnetventil insbesondere über magnetische Kräfte verstellt werden. Der Ventilkörper ist dabei vorzugsweise zumindest teilweise magnetisch ausgeführt, so dass die magnetischen Kräfte auf den Ventilkörper wirken können. Die magnetischen Kräfte können aber auch alternativ auf ein mit dem Ventilkörper verbundenes magnetisches Element wirken. In dem Fall kann der Ventilkörper auch nichtmagnetisch ausgeführt sein. Die magnetischen Kräfte werden bevorzugt von einer oder mehreren elektrischen Spulen (die auch als Elektromagnete bezeichnet werden können) erzeugt. Die magnetischen Kräfte hängen dabei von einem Stromfluss durch die eine oder die mehreren elektrischen Spulen ab. Sofern im Folgenden eine Stromstärke beschrieben ist, ist damit die Stromstärke eines Stromflusses durch die eine oder die mehreren elektrischen Spulen gemeint.

Vorzugsweise ist der Ventilkörper derart gelagert, dass der Ventilköper translatorisch verstellbar ist. Die magnetischen Kräfte sind dabei vorzugsweise in eine erste Richtung gerichtet. Demgegenüber wirkt vorzugsweise eine Rückstellkraft auf den Ventilkörper in eine der ersten Richtung entgegen gerichteten zweiten Richtung. Die Rückstellkraft kann insbesondere von einer Feder erzeugt werden. Je nach Stromstärke (eines Stromes durch die eine oder die mehreren elektrischen Spulen) überwiegt die magnetische Kraft (so dass eine Gesamtkraft in die erste Richtung resultiert) oder die Federkraft (so dass eine Gesamtkraft in die zweite Richtung resultiert).

Vorzugsweise ist der Ventilkörper zwischen einem ersten Anschlag und einem zweiten Anschlag verstellbar. Dabei liegt der Ventilkörper in der ersten Stellung vorzugsweise am ersten Anschlag an und in der zweiten Stellung vorzugsweise am zweiten Anschlag an. Der Ventilkörper kann insbesondere durch eine jeweils entsprechende Haltestromstärke an den Anschlägen gehalten werden. Beispielsweise kann der Ventilkörper in einer der Stellungen gehalten werden, indem eine erste Haltestromstärke von null angelegt ist. Dadurch wirkt nur die Rückstellkraft, die den Ventilkörper gegen den entsprechenden Anschlag drückt. Gleichermaßen kann die erste Haltestromstärke auch von null verschieden aber derart klein bemessen sein, dass die Rückstellkraft die magnetischen Kräfte überwiegt. In der anderen Stellung kann der Ventilkörper mit einer zweiten, von null verschiedenen, Haltestromstärke gehalten werden, die der Rückstellkraft eine betragsmäßig größere magnetische Kraft entgegensetzt, so dass der Ventilkörper an dem entsprechenden Anschlag gehalten wird.

Zum Umschalten des Magnetventils zwischen der ersten Stellung und der zweiten Stellung (also von der ersten Stellung in die zweite Stellung oder von der zweiten Stellung in die erste Stellung) wird der durch die eine oder die mehreren elektrischen Spulen fließende Strom verändert. Der beim oder zum Umschalten durch die eine oder die mehreren elektrischen Spulen fließende Strom soll hier als Schaltstrom bezeichnet werden. Der Schaltstrom kann auch die Stromstärke null aufweisen.

In Schritt a) des beschriebenen Verfahrens wird der Schaltstrom für ein erstes Zeitintervall auf eine Vorbestromungsstromstärke eingestellt, in welcher der Ventilkörper in der vorliegenden Stellung verbleibt.

Dass der Ventilkörper in der vorliegenden Stellung verbleibt, bedeutet, dass die Vorbestromungsstromstärke zu schwach ist, um ein Umschalten des Magnetventils zu bewirken. Liegt der Ventilkörper vor dem Umschalten gemäß dem beschriebenen Verfahren beispielsweise in der ersten Stellung vor, verbleibt der Ventilkörper auch bei Einstellen des Schaltstroms auf die Vorbestromungsstromstärke in der ersten Stellung.

Das erste Zeitintervall hat bevorzugt eine Länge im Bereich von 1 bis 100 Millisekunden, insbesondere im Bereich von 5 bis 10 Millisekunden.

In Schritt b) des beschriebenen Verfahrens wird der Schaltstrom für ein zweites Zeitintervall auf eine erste Umschaltstromstärke eingestellt, welche eine Umschaltbewegung des Ventilkörpers einleitet.

Die erste Umschaltstromstärke ist insbesondere derart bemessen, dass die Gesamtkraft aus der von der einen oder den mehreren elektrischen Spulen erzeugten magnetischen Kraft und der Rückstellkraft in die Richtung wirkt, in die der Ventilkörper zum Umschalten zu bewegen ist.

Beim Umschalten des Magnetventils von der geöffneten Stellung des Magnetventils in die geschlossene Stellung des Magnetventils kann die erste Umschaltstromstärke insbesondere eine erste Schließstromstärke sein. Beim Umschalten des Magnetventils von der geschlossenen Stellung des Magnetventils in die geöffnete Stellung des Magnetventils kann die erste Umschaltstromstärke insbesondere eine erste Öffnungsstromstärke sein.

Durch Einstellen des Schaltstroms auf die Vorbestromungsstromstärke kann erreicht werden, dass der anschließend folgende Umschaltprozess (der durch Anlegen der ersten Umschaltstromstärke in Schritt b) eingeleitet wird) besonders zuverlässig abläuft. Insbesondere kann der Umschaltprozess von Schwankungen einer Versorgungsspannung oder einer Versorgungsstromstärke unabhängig sein. Würde der Schaltstrom beispielsweise unmittelbar von der Haltestromstärke auf die erste Umschaltstromstärke umgeschaltet, können verschiedenste Effekte wie beispielsweise die Induktion dazu führen, dass der Umschaltstrom erst mit zeitlicher Verzögerung die erste Umschaltstromstärke erreicht. Insbesondere kann der zeitliche Verlauf des Schaltstroms dabei derart abgeflacht sein, dass der Schaltstrom sich nicht (wie gewünscht) sprunghaft von der Haltestromstärke auf die erste Umschaltstromstärke, sondern kontinuierlich verändert. Bei einem derartig abgeflachten Verlauf des Schaltstroms liegt der Schaltstrom nur über einem Teil des ersten Zeitintervalls mit der ersten Umschaltstromstärke an. Für ein Umschalten des Magnetventils kann dieser Teil des ersten Zeitintervalls zu kurz sein. Zur Berücksichtigung eines abgeflachten Verlaufs des Schaltstroms ist es prinzipiell möglich, das erste Zeitintervall entsprechend zu verlängern. Allerdings ist zu beachten, dass der Schaltstrom unter verschiedenen Bedingungen verschieden abgeflacht sein kann. Verschiedenste Einflüsse eines Versorgungsspannungsnetzwerks auf die Versorgungsspannung und mithin auch auf den Schaltstrom können bewirken, dass der Schaltstrom in unterschiedlichen Betriebssituationen des Versorgungsspannungsnetzwerks unterschiedlich abgeflacht ist. Um dennoch ein besonders zuverlässiges Umschalten zu erreichen, wird der Schaltstrom zunächst auf die Vorbestromungsstromstärke eingestellt. Damit ist der Sprung zur ersten Umschaltstromstärke besonders gering, so dass ein Abflachen des Verlaufs des Schaltstroms nur über eine besonders kurze Zeitspanne auftreten kann und damit nur einen besonders geringen Einfluss auf das Umschalten des Magnetventils haben kann.

Das Magnetventil ist bevorzugt an ein Steuergerät angebunden, das zur Durchführung des beschriebenen Verfahrens bestimmt und eingerichtet ist. Das Steuergerät weist vorzugsweise insbesondere einen Eingang auf, über den eine Anforderung zum Umschalten des Magnetventils empfangen werden kann. Der Eingang kann eine Benutzerschnittstelle zur Bedienung durch einen Benutzer und/oder eine Schnittstelle zum Anbinden an ein elektronisches System umfassen. Insbesondere kann das Steuergerät mit einem Elektronik eines Kraftfahrzeugs verbunden sein. Weiterhin ist das Steuergerät bevorzugt mit der einen oder den mehreren elektrischen Spulen des Magnetventils verbunden, wobei durch das Steuergerät der Strom durch die eine oder die mehreren elektrischen Spulen vorgegeben werden kann.

In einer bevorzugten Ausführungsform des Verfahren ist das zweite Zeitintervall derart bemessen, dass das Umschalten des Magnetventils nach dem zweiten Zeitintervall noch nicht abgeschlossen ist.

Beim Umschalten des Magnetventils kann der Ventilkörper insbesondere über das gesamte zweite Zeitintervall beschleunigt werden. Je länger das zweite Zeitintervall andauert, d.h. je länger die Beschleunigung des Ventilkörpers durch die Umschaltstromstärke andauert, umso größer wird die Geschwindigkeit der Umschaltbewegung des Ventilkörpers, also die Geschwindigkeit, mit der der Ventilkörper von der ersten Stellung zur zweiten Stellung bzw. von der zweiten Stellung zur ersten Stellung bewegt wird. Trifft der Ventilkörper mit einer besonders großen Geschwindigkeit auf den entsprechenden Anschlag auf, kann dies als unangenehmes lautes Geräusch (insbesondere als ein Knall) wahrgenommen werden. Um die Entstehung eines solchen Aufprallgeräusches beim Aufprallen des Ventilkörpers auf einen Anschlag zu verhindern oder zumindest zu reduzieren, wird die Umschaltstromstärke nur über das zweite Zeitintervall angelegt, das derart bemessen ist, dass das Umschalten des Magnetventils nach dem zweiten Zeitintervall noch nicht abgeschlossen ist. Bevorzugt erfolgt die Beschleunigung des Ventilkörpers durch die Umschaltstromstärke nur so lange wie für ein Umschalten nötig. Nach Ende des zweiten Zeitintervalls kann sich der Ventilkörper insbesondere durch Massenträgheit auch ohne weitere Beschleunigung in Richtung auf den entsprechenden Anschlag weiter bewegen, so dass der Umschaltvorgang nach dem zweiten Zeitintervall vollendet werden kann.

In einer bevorzugten Ausführungsform umfasst das Verfahren weiterhin den folgenden Verfahrensschritt:
c) Einstellen des Schaltstroms auf eine Dämpfungsstromstärke, welche eine Geschwindigkeit der Umschaltbewegung anpasst, für ein drittes Zeitintervall.

Die Geräuschentwicklung kann insbesondere dadurch besonders gut verhindert oder zumindest reduziert werden, dass der Ventilkörper vor dem Aufprallen auf den entsprechenden Anschlag abgebremst wird. Das kann insbesondere gemäß Schritt c) erfolgen. Die Dämpfungsstromstärke ist dabei vorzugsweise (insbesondere auch im Zusammenspiel mit der Umschaltstromstärke, der Dauer des zweiten Zeitintervalls und des dritten Zeitintervalls) derart bemessen, dass der gemäß Schritt b) beschleunigte Ventilkörper den entsprechenden Anschlag mit einer besonders geringen Geschwindigkeit erreicht, so dass es zu einer besonders geringen Geräuschentwicklung kommt.

Gemäß dem hier beschriebenen Verfahren ist das Magnetventil durch Vorliegen des Schaltstroms mit einer Stromstärke oberhalb einer oberen Grenzstromstärke aus der ersten Stellung in die zweite Stellung umschaltbar, wobei die Vorbestromungsstromstärke unterhalb der oberen Grenzstromstärke liegt.

Fließt ein Strom mit der oberen Grenzstromstärke durch die eine oder die mehreren elektrischen Spulen, liegt ein Kräftegleichgewicht zwischen der Rückstellkraft und den magnetischen Kräften vor. Bei einer Stromstärke oberhalb der oberen Grenzstromstärke liegt der Ventilkörper vorzugsweise in der zweiten Stellung vor oder wird in die zweite Stellung bewegt (insbesondere sofern der Ventilkörper zuvor in der ersten Stellung vorlag und eine solche Stromstärke noch nicht hinreichend lange vorliegt).

Dass die Vorbestromungsstromstärke unterhalb der oberen Grenzstromstärke liegt, ist insbesondere beim Umschalten des Magnetventils von der ersten Stellung in die zweite Stellung sinnvoll. Dadurch wird das Umschalten des Magnetventils noch nicht durch die Vorbestromungsstromstärke eingeleitet. Auch beim Umschalten von der zweiten Stellung in die erste Stellung ist es sinnvoll, die Vorbestromungsstromstärke zumindest unterhalb der oberen Grenzstromstärke zu wählen. Ansonsten würde es beim Einstellen der ersten Umschaltstromstärke zu einem besonders großen und damit besonders ungünstigen Sprung im Schaltstrom kommen (was insbesondere zu einem besonders stark abgeflachten Verlauf des Schaltstroms führen kann).

In einer weiteren bevorzugten Ausführungsform des Verfahrens beträgt die Vorbestromungsstromstärke mindestens 90 %, vorzugsweise mindestens 95 % der oberen Grenzstromstärke.

In dieser Ausführungsform ist die Vorbestromungsstromstärke knapp unterhalb der oberen Grenzstromstärke gewählt. Das ist insbesondere beim Umschalten des Magnetventils von der ersten Stellung in die zweite Stellung sinnvoll. Durch eine derartig gewählte Vorbestromungsstromstärke wird ein Umschalten des Magnetventils von der ersten Stellung in die zweite Stellung zwar noch nicht eingeleitet, die Vorbestromungsstromstärke ist aber bereits nahe an der für ein derartiges Umschalten erforderlichen oberen Grenzströmstärke. Damit tritt beim Einstellen der ersten Umschaltstromstärke ein besonders kleiner Sprung im Schaltstrom auf.

In einer Ausführungsform des Verfahren ist das Magnetventil durch Vorliegen des Schaltstroms mit einer Stromstärke unterhalb einer unteren Grenzstromstärke aus der zweiten Stellung in die erste Stellung umschaltbar, wobei die Vorbestromungsstromstärke oberhalb der unteren Grenzstromstärke liegt.

Fließt ein Strom mit der unteren Grenzstromstärke durch die eine oder die mehreren elektrischen Spulen, liegt ein Kräftegleichgewicht zwischen der Rückstellkraft und den magnetischen Kräften vor. Bei einer Stromstärke unterhalb der unteren Grenzstromstärke liegt der Ventilkörper vorzugsweise in der ersten Stellung vor oder wird in die erste Stellung bewegt (insbesondere sofern der Ventilkörper zuvor in der zweiten Stellung vorlag und eine solche Stromstärke noch nicht hinreichend lange vorliegt).

Die obere Grenzstromstärke und die untere Grenzstromstärke sind bevorzugt voneinander beabstandet. Das kann insbesondere dann der Fall sein, wenn die magnetische Kraft in der ersten Stellung und in der zweiten Stellung des Ventilkörpers unterschiedlich stark ausgeprägt ist. Das kann beispielsweise daran liegen, dass der Ventilkörper in der ersten Stellung und in der zweiten Stellung unterschiedlich weit von der einen oder den mehreren elektrischen Spulen entfernt angeordnet ist. Auch kann an einem der Anschläge oder an beiden Anschlägen ein Halteelement für den Ventilkörper vorgesehen sein. Beispielsweise kann ein Vorsprung an dem Ventilkörper an den Anschlägen in eine jeweilige Nut als ein Halteelement eingreifen. Es ist aber auch denkbar, dass die obere Grenzstromstärke und die untere Grenzstromstärke zusammenfallen.

Dass die Vorbestromungsstromstärke oberhalb der unteren Grenzstromstärke liegt, ist insbesondere beim Umschalten des Magnetventils von der zweiten Stellung in die erste Stellung sinnvoll. Dadurch wird das Umschalten des Magnetventils noch nicht durch die Vorbestromungsstromstärke eingeleitet. Auch beim Umschalten von der ersten Stellung in die zweite Stellung ist es sinnvoll, die Vorbestromungsstromstärke zumindest oberhalb der unteren Grenzstromstärke zu wählen. Ansonsten würde es beim Einstellen der ersten Umschaltstromstärke zu einem besonders großen und damit besonders ungünstigen Sprung im Schaltstrom kommen (was insbesondere zu einem besonders stark abgeflachten Verlauf des Schaltstroms führen kann).

In einer weiteren bevorzugten Ausführungsform des Verfahren beträgt die Vorbestromungsstromstärke höchstens 110 % der unteren Grenzstromstärke.

In dieser Ausführungsform ist die Vorbestromungsstromstärke knapp oberhalb der unteren Grenzstromstärke gewählt. Das ist insbesondere beim Umschalten des Magnetventils von der zweiten Stellung in die erste Stellung sinnvoll. Durch eine derartig gewählte Vorbestromungsstromstärke wird ein Umschalten des Magnetventils von der zweiten Stellung in die erste Stellung zwar noch nicht eingeleitet, die Vorbestromungsstromstärke ist aber bereits nahe an der für ein derartiges Umschalten erforderlichen unteren Grenzströmstärke. Damit tritt beim Einstellen der ersten Umschaltstromstärke ein besonders kleiner Sprung im Schaltstrom auf.

In einer weiteren bevorzugten Ausführungsform umfasst das Verfahren weiterhin den folgenden Verfahrensschritt:
d) Einstellen des Schaltstroms auf eine zweite Umschaltstromstärke, durch welche sichergestellt wird, dass ein Umschalten des Magnetventils erfolgt ist.

Das Umschalten des Magnetventils nach den Schritten a) bis c) des beschriebenen Verfahrens kann wie zuvor beschrieben unter besonders geringer Geräuschentwicklung erfolgen. Dazu trifft der Ventilkörper mit einer besonders geringen Geschwindigkeit auf die Anschläge auf. Eine derartiges Umschalten mit geringen Geschwindigkeiten des Ventilkörpers kann dazu führen, dass ein Umschaltvorgang nicht vollständig abläuft, so dass der Ventilkörper - anders als gewünscht - durch den Umschaltvorgang nicht umgestellt wird. Das kann insbesondere daran liegen, dass bei einem Umschalten gemäß den Schritten a) bis c) des beschriebenen Verfahrens bereits geringe externe Einflüsse den Ventilkörper über das Abbremsen gemäß Schritt c) hinaus weiter abbremsen können, so dass die Bewegungsgeschwindigkeit des Ventilkörpers nicht mehr ausreicht, den entsprechenden Anschlag zu erreichen. Als externe Einflüsse kommen hier beispielsweise magnetische Kräfte in Betracht, die den Ventilkörper abbremsen. Auch kann der Ventilkörper durch eine Reibung an Komponenten des Magnetventils (wie beispielsweise einer Aufnahme, innerhalb derer der Ventilkörper beweglich gelagert ist) abgebremst werden.

Durch Schritt d) kann ein Umschalten des Ventils in dem Fall erfolgen, dass der Ventilkörper - anders als gewünscht - durch den Umschaltvorgang gemäß den Schritten a) bis c) und insbesondere gemäß Schritt b) nicht umgestellt wurde. Dazu wird nachfolgend zu Schritt c) gemäß Schritt d) die zweite Umschaltstromstärke angelegt. Sollte der Ventilkörper aus der ersten Stellung in die zweite Stellung bewegt werden, liegt die zweite Umschaltstromstärke bevorzugt oberhalb der ersten Umschaltstromstärke, zumindest aber oberhalb der oberen Grenzstromstärke. Sollte der Ventilkörper aus der zweiten Stellung in die erste Stellung bewegt werden, liegt die zweite Umschaltstromstärke bevorzugt unterhalb der ersten Umschaltstromstärke, zumindest aber unterhalb der unteren Grenzstromstärke.

Das vierte Zeitintervall ist bevorzugt (insbesondere im Zusammenspiel mit der zweiten Umschaltstromstärke) hinreichend lang bemessen, dass ein Umschalten des Magnetventils (sofern dieses nicht bereits gemäß der Schritte a) bis c) wie gewünscht erfolgt ist) mit einer besonders hohen Wahrscheinlichkeit erfolgt. Auch ist es möglich, dass das vierte Zeitintervall unbegrenzt ist, so dass die zweite Umschaltstromstärke so lange anliegt, bis das Magnetventil erneut umgeschaltet wird. Das kann insbesondere dann der Fall sein, wenn sowohl für die zweite Umschaltstromstärke als auch für die erste Haltestromstärke eine Stromstärke von null gewählt ist.

Beim Umschalten des Magnetventils von der geöffneten Stellung des Magnetventils in die geschlossene Stellung des Magnetventils kann die zweite Umschaltstromstärke insbesondere eine zweite Schließstromstärke sein. Beim Umschalten des Magnetventils von der geschlossenen Stellung des Magnetventils in die geöffnete Stellung des Magnetventils kann die zweite Umschaltstromstärke insbesondere eine zweite Öffnungsstromstärke sein.

In einer weiteren bevorzugten Ausführungsform des Verfahren wird eine Einstellung des Magnetventils zumindest während der Dauer von Schritt d) überwacht.

Vorzugsweise wird die Einstellung des Magnetventils derart überwacht, dass die Position des Ventilkörpers (beispielsweise als ein Abstand von dem ersten Anschlag und/oder von dem zweiten Anschlag) erfasst wird. Alternativ ist es bevorzugt, dass erfasst wird, ob sich der Ventilkörper in der ersten Stellung oder in der zweiten Stellung befindet. Das Überwachen der Einstellung des Magnetventils kann insbesondere mittels eines Sensors an dem Magnetventil erfolgen. Der Sensor ist bevorzugt mit dem Steuergerät verbunden.

Die Überwachung in Schritt d) (Überwachung der Position des Ventilkörpers) kann insbesondere durch die Überwachung eines Stromgradienten erfolgen. Insbesondere kann das Umschalten des Magnetventils am zeitlichen Verlauf des Stromes durch die elektrische Spule erkannt werden. Dazu ist zwischen einem idealisierten zeitlichen Verlauf des Stromes und einem realen zeitlichen Verlauf des Stroms zu unterscheiden. Wird beispielsweise eine Spannung schlagartig an die elektrische Spule angelegt oder erhöht, steigt der Strom durch die Spule in einer idealisierten Betrachtungsweise sprunghaft an. Tatsächlich aber kommt es aufgrund von Selbstinduktion in der elektrischen Spule zu einem zeitlich verzögerten Anstieg des Stromes. Der Strom steigt dabei insbesondere gemäß einer Exponentialfunktion an und nähert sich dem Wert an, auf den der Strom bei idealisierter Betrachtung sofort gesprungen wäre.

Der Ventilkörper ist vorzugsweise zumindest teilweise magnetisch ausgeführt und/oder mit einem magnetischen Element verbunden, auf welches die magnetischen Kräfte der elektrischen Spule wirken können. Der magnetische Ventilkörper bzw. das magnetische Element befinden sich vorzugsweise zumindest teilweise in dem Magnetfeld, das von der elektrischen Spule erzeugt wurde. Die magnetische Permeabilität des magnetischen Ventilkörpers bzw. des magnetischen Elements beeinflusst dabei das von der elektrischen Spule erzeugte Magnetfeld bzw. den durch die elektrische Spule fließenden Strom. Bewegt sich der Ventilkörper, kommt es aufgrund von Induktion zu einer Beeinflussung des Stromes durch die elektrische Spule. Insbesondere kann der sich bewegende Ventilkörper aufgrund des Grundprinzips der elektromagnetischen Induktion einen Strom in der Spule induzieren, der ein Magnetfeld bewirkt, das der Bewegung des Ventilkörpers entgegenwirkt. Das bedeutet insbesondere, dass der durch die elektrische Spule fließende Strom bei Erhöhen auf die zweite Umschaltstromstärke bei Bewegung des Ventilkörpers (also insbesondere bei einem Umschalten des Magnetventils) gedämpft wird. Dies drückt sich als ein Artefakt im zeitlichen Verlauf des Stroms durch die elektrische Spule aus. Somit kann ein Umschalten des Ventilkörpers an dem zeitlichen Verlauf des Stromes erkannt werden.

Bevorzugt kann durch die Überwachung der Einstellung des Magnetventils während der Dauer von Schritt d) (also insbesondere innerhalb des vierten Zeitintervalls) erkannt werden, ob ein Umschalten des Magnetventils wie gewünscht gemäß den Schritten a) bis c) und insbesondere gemäß Schritt b) erfolgt ist, oder ob das Umschalten des Magnetventils erst in Schritt d) erfolgt ist.

In einer weiteren bevorzugten Ausführungsform des Verfahrens wird eine Mehrzahl gleichartiger Schaltvorgänge durchgeführt, wobei der Ventilkörper in einem nachfolgenden Schaltvorgang im zweiten Zeitintervall verstärkt beschleunigt wird, sofern bei mindestens einem vorhergehenden Schaltvorgang in Schritt d) ein Umschalten des Magnetventils erkannt wurde.

In einer weiteren bevorzugten Ausführungsform des Verfahren wird eine Mehrzahl gleichartiger Schaltvorgänge durchgeführt, wobei der Ventilkörper in einem nachfolgenden Schaltvorgang im zweiten Zeitintervall geringer beschleunigt wird, sofern bei mindestens einem vorhergehenden Schaltvorgang in Schritt d) kein Umschalten des Magnetventils erkannt wurde.

Unter einer Mehrzahl gleichartiger Schaltvorgänge ist insbesondere zu verstehen, dass das Magnetventil wiederholt zwischen der ersten Stellung und der zweiten Stellung hin- und her geschaltet wird, ohne dass weitere Veränderungen am Magnetventil vorgenommen werden. Insbesondere kann ein Umschalten von der ersten Stellung in die zweite Stellung gleichartig mit einem Umschalten von der zweiten Stellung in die erste Stellung sein. Wird eine Mehrzahl von gleichartigen Schaltvorgängen durchgeführt, können Parameter des beschriebenen Verfahrens iterativ (d.h. beispielsweise von einem Schaltvorgang zum nachfolgenden Schaltvorgang) verbessert werden, indem einer oder mehrere der vorhergehenden Schaltvorgänge ausgewertet werden. In den beiden vorliegenden Ausführungsformen kann das dadurch erreicht werden, dass die Beschleunigung, die der Ventilkörper in Schritt b) (also im zweiten Zeitintervall) erfährt, iterativ angepasst wird.

Die Beschleunigung des Ventilkörpers kann insbesondere durch Vergrößern des zweiten Zeitintervalls verstärkt und durch Verkleinern des zweiten Zeitintervalls verringert werden. Alternativ oder zusätzlich kann die Beschleunigung des Ventilkörpers durch Anpassung der ersten Umschaltungsstromstärke angepasst werden. Beim Umschalten von der ersten Stellung in die zweite Stellung kann die Beschleunigung des Ventilkörpers durch Vergrößern der ersten Umschaltstromstärke verstärkt werden. Beim Umschalten von der zweiten Stellung in die erste Stellung kann die Beschleunigung des Ventilkörpers durch Verkleinern der ersten Umschaltstromstärke verstärkt werden.

Die Beschleunigung des Ventilkörpers durch Schritt b) ist einerseits vorzugsweise besonders gering, damit die Geräuschentwicklung (durch Auftreffen des Ventilkörpers auf den entsprechenden Anschlag) besonders gering ist. Andererseits ist die Beschleunigung des Ventilkörpers durch Schritt b) aber vorzugsweise zumindest so groß, dass diese für ein Umschalten des Magnetventils ausreicht (so dass es nicht erst in Schritt d) zu einem Umschalten kommt). Gemäß den beiden vorliegenden Ausführungsformen kann die Beschleunigung des Ventilkörpers iterativ angepasst werden, so dass eine Beschleunigung gefunden werden kann, bei der einerseits ein Umschalten gemäß den Schritten a) bis c) erfolgt, andererseits aber auch eine Geräuschentwicklung besonders gering ist.

Wird bei der Mehrzahl der Schaltvorgänge erkannt, dass ein Umschalten regelmäßig erst in Schritt d) erfolgt, wird die Beschleunigung des Ventilkörpers bevorzugt verstärkt, damit bei nachfolgenden Schaltvorgängen das Umschalten häufiger wie gewünscht gemäß den Schritten a) bis c) und insbesondere gemäß Schritt b) erfolgt.

Wird bei der Mehrzahl der Schaltvorgänge erkannt, dass ein Umschalten nie oder nur sehr selten erst in Schritt d) erfolgt, wird die Beschleunigung des Ventilkörpers bevorzugt verringert, damit es zu einer besonders geringen Geräuschentwicklung kommt.

Die Verringerung oder Verstärkung der Beschleunigung wird bevorzugt durch eine Anpassung der ersten Umschaltstromstärke erreicht.

Das iterative Anpassen kann insbesondere durch das Steuergerät erfolgen. Dazu werden dem Steuergerät bevorzugt insbesondere Informationen betreffend die Beschleunigung des Ventilkörpers (also vorzugsweise insbesondere die Höhe der ersten Umschaltstromstärke, die Dauer des zweiten Zeitintervalls und die Information, ob ein Umschalten des Magnetventils in Schritt d) erfolgt ist) bei den einzelnen Schaltvorgängen bereitgestellt. Mit einer entsprechenden auf dem Steuergerät installierten Software kann aus diesen Informationen ermittelt werden, wie die Beschleunigung für einen nachfolgenden Schaltvorgang zu wählen ist, wobei insbesondere die Höhe der ersten Umschaltstromstärke und die Dauer des zweiten Zeitintervalls für den nachfolgenden Schaltvorgang festgelegt werden.

Als weiterer Aspekt wird ein Steuergerät vorgestellt, wobei das Steuergerät zur Durchführung des beschriebenen Verfahrens eingerichtet ist. Zudem wird ein Computerprogramm vorgestellt, welches zur Durchführung des beschriebenen Verfahrens eingerichtet ist. Weiterhin wird ein maschinenlesbares Speichermedium vorgestellt, auf dem das Computerprogramm gespeichert ist.

Die weiter vorne beschriebenen besonderen Vorteile und Ausgestaltungsmerkmale des Verfahrens sind auf das Steuergerät, das Computerprogramm und das maschinenlesbare Speichermedium anwendbar und übertragbar.

Weitere Einzelheiten der Erfindung und ein Ausführungsbeispiel, auf welches die Erfindung jedoch nicht beschränkt ist, werden anhand der Zeichnungen näher erläutert. Es zeigen:
- Fig. 1:: eine schematische Darstellung eines Magnetventils,
- Fig. 2:: einen schematischen Verlauf eines Schaltstroms beim Umschalten des Magnetventils aus Fig. 1 von einer ersten Stellung in eine zweite Stellung,
- Fig. 3:: einen schematischen Verlauf eines Schaltstroms beim Umschalten des Magnetventils aus Fig. 1 von der zweiten Stellung in die erste Stellung, und
- Fig. 4:: einen schematischen Verlauf eines Schaltstroms bei mehrfachem Umschalten des Magnetventils aus Fig. 1 von der ersten Stellung in die zweite Stellung.

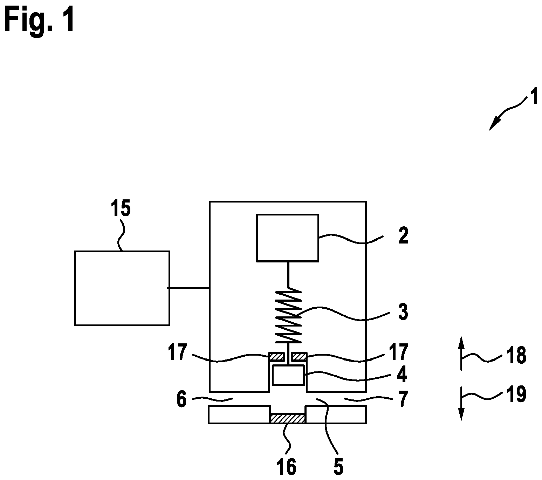

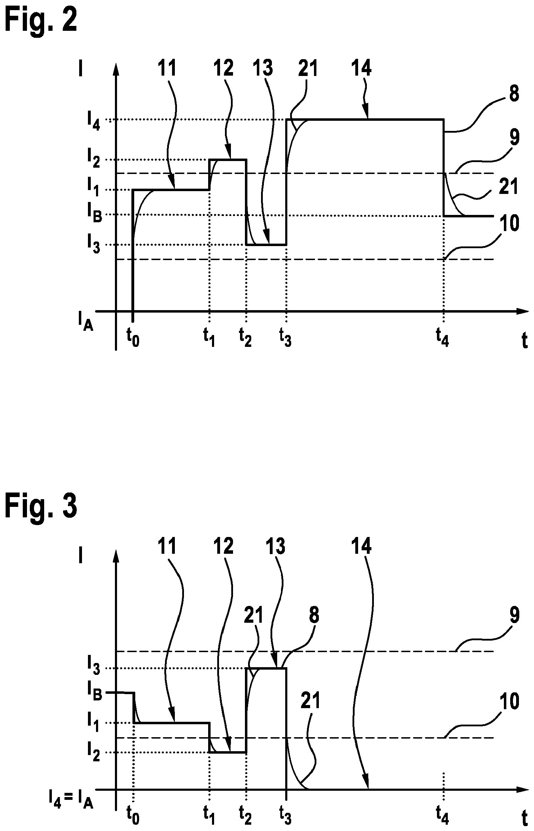

Fig. 1 zeigt ein Magnetventil 1 mit einem Ventilkörper 4, der zwischen einem ersten Anschlag 16 und einem zweiten Anschlag 17 verstellbar ist. Am ersten Anschlag 16 befindet sich der Ventilkörper 4 in einer ersten Stellung. Am zweiten Anschlag 17 befindet sich der Ventilkörper 4 (wie in dieser Darstellung gezeigt) in einer zweiten Stellung. Das Magnetventil 1 weist einen Kanal 5 zwischen einem Einlass 6 und einem Auslass 7 auf. Der Kanal 5 ist in der (hier gezeigten) zweiten Stellung des Ventilkörpers 4 freigegeben, so dass das Magnetventil 1 geöffnet ist. In dem Fall kann ein Medium von dem Einlass 6 durch den Kanal 5 an dem Ventilkörper 4 vorbei zum Auslass 7 und damit aus dem Magnetventil 1 herausströmen. Versperrt der Ventilkörper 4 hingegen den Kanal, ist das Magnetventil 1 geschlossen und das Medium kann nicht aus dem Magnetventil 1 bzw. aus dem Auslass 7 herausströmen. In dem Magnetventil 1 ist eine elektrische Spule 2 angeordnet, die auf den Ventilkörper 4 - je nach Stromfluss durch die elektrische Spule - eine magnetische Kraft in eine erste Richtung (hier nach oben) ausübt. Der Ventilkörper 4 ist an eine Feder 3 angebunden, die auf den Ventilkörper 4 eine Kraft in eine zweite Richtung 19 (hier nach unten) ausübt. Das Magnetventil 1 ist an eine Steuereinheit 15 angebunden, über die das Magnetventil 1 umgeschaltet werden kann. Dazu wird der in den Fig. 2 und 3 gezeigte Strom durch die elektrische Spule 2 geleitet.

In den Fig. 2 und 3 ist jeweils eine Stromstärke I gegen eine Zeit t (jeweils in beliebigen Einheiten) aufgetragen. Gezeigt ist der zeitliche Verlauf eines Schaltstroms 8 zum Umschalten des Magnetventils 1 aus Fig. 1 von der ersten Stellung in die zweite Stellung (Fig. 2) bzw. von der zweiten Stellung in die erste Stellung (Fig. 3). Der Schaltstrom 8 ist idealisiert gezeigt. Zusätzlich ist mit einer gegenüber dem Schaltstrom 8 dünneren Linie ein realer Schaltstrom 21 gezeigt, bei dem Veränderungen bedingt durch Selbstinduktion erst zeitlich verzögert erfolgen. Der ersten Stellung ist eine erste Haltestromstärke I_{A} und der zweiten Stellung eine zweite Haltestromstärke I_{B} zugeordnet. Eingezeichnet ist zudem eine obere Grenzstromstärke 9, wobei das Magnetventil 1 durch Vorliegen des Schaltstroms 8 mit einer Stromstärke oberhalb der oberen Grenzstromstärke 9 aus der ersten Stellung in die zweite Stellung umschaltbar ist. Weiterhin ist eine untere Grenzstromstärke 10 eingezeichnet, wobei das Magnetventil 1 durch Vorliegen des Schaltstroms 8 mit einer Stromstärke unterhalb der unteren Grenzstromstärke 10 aus der zweiten Stellung in die erste Stellung umschaltbar ist.

In Fig. 2 ist das Umschalten des Magnetventils 1 von der ersten Stellung in die zweite Stellung gezeigt. Das Magnetventil 1 befindet sich dabei bis zu einem Anfangszeitpunkt t₀ in der ersten Stellung. Dazu liegt die erste Haltestromstärke I_{A} an. In einem ersten Zeitintervall 11, zwischen dem Anfangszeitpunkt to und einem ersten Zeitpunkt t₁, wird der Schaltstrom 8 auf eine Vorbestromungsstromstärke I₁ eingestellt, in welcher der Ventilkörper 4 in der vorliegenden Stellung (also in der ersten Stellung) verbleibt. Die Vorbestromungsstromstärke I₁ liegt unterhalb der oberen Grenzstromstärke 9. Zudem beträgt die Vorbestromungsstromstärke I₁ 90 % der oberen Grenzstromstärke. Insbesondere dabei ist anzumerken, dass die Fig. 2 der Übersichtlichkeit halber nur schematisch und nicht exakt skaliert ist. Zwischen dem ersten Zeitpunkt t₁ und einem zweiten Zeitpunkt t₂, in einem zweiten Zeitintervall 12 wird der Schaltstrom 8 auf eine erste Umschaltstromstärke I₂ eingestellt, welche eine Umschaltbewegung des Ventilkörpers 4 einleitet. Das zweite Zeitintervall 12 ist derart bemessen, dass das Umschalten des Magnetventils 1 nach dem zweiten Zeitintervall 12 noch nicht abgeschlossen ist. Zwischen dem zweiten Zeitpunkt t₂ und einem dritten Zeitpunkt t₃, in einem dritten Zeitintervall 13, wird der Schaltstrom 8 auf eine Dämpfungsstromstärke I₃, eingestellt, welche eine Geschwindigkeit der Umschaltbewegung anpasst, insbesondere verringert. Das kann eine Geräuschentwicklung beim Aufprall des Ventilkörpers 4 auf den zweiten Anschlag 17 reduzieren. Zwischen dem dritten Zeitpunkt t₃ und einem vierten Zeitpunkt t₄, in einem vierten Zeitintervall 14, wird der Schaltstrom 8 auf eine zweite Umschaltstromstärke t₄ eingestellt, durch welche sichergestellt wird, dass ein Umschalten des Magnetventils 1 erfolgt ist. Nach dem vierten Zeitpunkt t₄ befindet sich das Magnetventil 1 in der zweiten Stellung. Entsprechend liegt die zweite Haltestromstärke I_{B} an.

In Fig. 3 ist das Umschalten des Magnetventils 1 von der zweiten Stellung in die erste Stellung gezeigt. Das Magnetventil 1 befindet sich dabei bis zu einem Anfangszeitpunkt t₀ in der zweiten Stellung. Dazu liegt die zweite Haltestromstärke I_{B} an. In einem ersten Zeitintervall 11, zwischen dem Anfangszeitpunkt t₀ und einem ersten Zeitpunkt t₁, wird der Schaltstrom 8 auf eine Vorbestromungsstromstärke I₁ eingestellt, in welcher der Ventilkörper 4 in der vorliegenden Stellung (also in der zweiten Stellung) verbleibt. Die Vorbestromungsstromstärke I₁ liegt oberhalb der unteren Grenzstromstärke 10. Zudem beträgt die Vorbestromungsstromstärke I₁ 110 % der unteren Grenzstromstärke. Insbesondere dabei ist anzumerken, dass die Fig. 3 der Übersichtlichkeit halber nur schematisch und nicht exakt skaliert ist. Zwischen dem ersten Zeitpunkt t₁ und einem zweiten Zeitpunkt t₂, in einem zweiten Zeitintervall 12 wird der Schaltstrom 8 auf eine erste Umschaltstromstärke I₂ eingestellt, welche eine Umschaltbewegung des Ventilkörpers 4 einleitet. Das zweite Zeitintervall 12 ist derart bemessen, dass das Umschalten des Magnetventils 1 nach dem zweiten Zeitintervall 12 noch nicht abgeschlossen ist. Zwischen dem zweiten Zeitpunkt t₂ und einem dritten Zeitpunkt t₃, in einem dritten Zeitintervall 13, wird der Schaltstrom 8 auf eine Dämpfungsstromstärke I₃, eingestellt, welche eine Geschwindigkeit der Umschaltbewegung anpasst, insbesondere verringert. Das kann eine Geräuschentwicklung beim Aufprall des Ventilkörpers 4 auf den ersten Anschlag 16 reduzieren. Zwischen dem dritten Zeitpunkt t₃ und einem vierten Zeitpunkt t₄, in einem vierten Zeitintervall 14, wird der Schaltstrom 8 auf eine zweite Umschaltstromstärke t₄ eingestellt, durch welche sichergestellt wird, dass ein Umschalten des Magnetventils 1 erfolgt ist.

Nach dem vierten Zeitpunkt befindet sich das Magnetventil 1 in der ersten Stellung. Entsprechend liegt die erste Haltestromstärke I_{A} an. Sowohl die zweite Umschaltstromstärke I₄ als auch die ersten Haltestromstärke I_{A} sind hier gleich null. Das bedeutet dass das Ventil bzw. der Ventilkörper (nur) durch die Rückstellkraft in der ersten Stellung gehalten wird und der Magnet in der ersten Stellung keine Kräfte ausübt. Das vierte Zeitintervall 14 und der vierte Zeitpunkt t₄ sind hier aber dennoch eingezeichnet, um einen Vergleich zu Fig. 2 zu verdeutlichen.

Sowohl beim Umschalten des Magnetventils 1 von der ersten Stellung in die zweite Stellung (Fig. 2) also auch beim Umschalten des Magnetventils 1 von der zweiten Stellung in die erste Stellung (Fig. 3) wird eine Einstellung des Magnetventils 1 während des vierten Zeitintervalls 14 überwacht. Wird eine Mehrzahl von gleichartigen Schaltvorgängen durchgeführt, kann der Ventilkörper 4 in einem nachfolgenden Schaltvorgang im zweiten Zeitintervall 12 verstärkt beschleunigt werden, sofern bei einem vorhergehenden Schaltvorgang ein Umschalten des Magnetventils 1 erst im vierten Zeitintervall 14 erkannt wurde. Wird hingegen kein Umschalten im vierten Zeitintervall 14 erkannt, kann der Ventilkörper 4 in einem nachfolgenden Schaltvorgang im zweiten Zeitintervall 12 geringer beschleunigt werden.

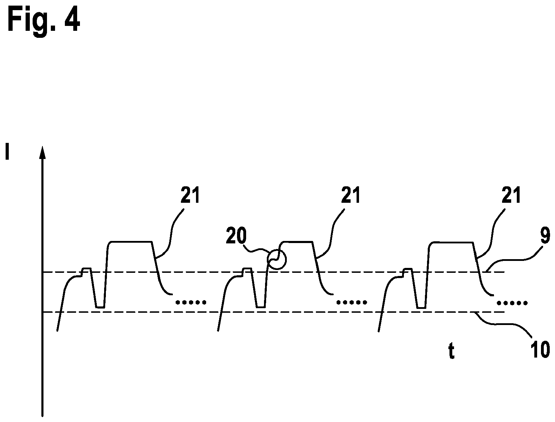

Fig. 4 zeigt einen schematischen Verlauf des Schaltstroms bei mehrfachem Umschalten des Magnetventils 1 aus Fig. 1 von der ersten Stellung in die zweite Stellung. Dabei sind drei Umschaltvorgänge gezeigt, die (wie durch Punkte angedeutet) nicht unmittelbar aneinander anschließend ablaufen. Wie in Fig. 2 ist hier der Strom I gegenüber der Spannung t aufgetragen und der reale Schaltstrom 21 gezeigt. Beim linken und beim rechten dargestellten Umschaltvorgang ist das Magnetventil 1 wie gewünscht umgeschaltet. Beim mittleren Umschaltvorgang hingegen ist im realen Schaltstrom 21 ein Artefakt 20 zu erkennen. Das Artefakt 20 entsteht bedingt durch eine Bewegung des Ventilkörpers 4 (also bedingt durch das Umschalten des Magnetventils 1) aufgrund von elektromagnetischer Induktion. Dieses Artefakt 20 zeigt, dass das Magnetventil 1 erst aufgrund der zweiten Umschaltstromstärke I₄ umgeschaltet ist.

## Patentansprüche

1. Verfahren zum Umschalten eines Magnetventils (1) mit einem beweglichen Ventilkörper (4) zwischen einer ersten Stellung und einer zweiten Stellung, wobei das Verfahren zumindest die folgenden Verfahrensschritte umfasst:
a) Einstellen eines Schaltstroms (8) auf eine Vorbestromungsstromstärke (I₁), in welcher der Ventilkörper (4) in der vorliegenden Stellung verbleibt, für ein erstes Zeitintervall (11), und
b) Einstellen des Schaltstroms (8) auf eine erste Umschaltstromstärke (I₂), welche eine Umschaltbewegung des Ventilkörpers (4) einleitet, für ein zweites Zeitintervall (12),
wobei das Magnetventil (1) durch Vorliegen des Schaltstroms (8) mit einer Stromstärke oberhalb einer oberen Grenzstromstärke (9) aus der ersten Stellung in die zweite Stellung umschaltbar ist, wobei die Vorbestromungsstromstärke (I₁) unterhalb der oberen Grenzstromstärke (9) liegt.

2. Verfahren nach Anspruch 1, wobei das zweite Zeitintervall (12) derart bemessen ist, dass das Umschalten des Magnetventils (1) nach dem zweiten Zeitintervall (12) noch nicht abgeschlossen ist.

3. Verfahren nach einem der vorhergehenden Ansprüche, weiterhin umfassend den folgenden Verfahrensschritt:
c) Einstellen des Schaltstroms (8) auf eine Dämpfungsstromstärke (I₃), welche eine Geschwindigkeit der Umschaltbewegung anpasst, für ein drittes Zeitintervall (13).

4. Verfahren nach Anspruch 1, wobei die Vorbestromungsstromstärke (I₁) mindestens 90 % der oberen Grenzstromstärke beträgt.

5. Verfahren nach einem der vorhergehenden Ansprüche, wobei das Magnetventil (1) durch Vorliegen des Schaltstroms (8) mit einer Stromstärke unterhalb einer unteren Grenzstromstärke (10) aus der zweiten Stellung in die erste Stellung umschaltbar ist, wobei die Vorbestromungsstromstärke (I₁) oberhalb der unteren Grenzstromstärke (10) liegt.

6. Verfahren nach Anspruch 5, wobei die Vorbestromungsstromstärke (I₁) höchstens 110 % der unteren Grenzstromstärke beträgt.

7. Verfahren nach einem der vorhergehenden Ansprüche, weiterhin umfassend den folgenden Verfahrensschritt:
d) Einstellen des Schaltstroms (8) auf eine zweite Umschaltstromstärke (I₄), durch welche sichergestellt wird, dass ein Umschalten des Magnetventils (1) erfolgt ist.

8. Verfahren nach Anspruch 7, wobei eine Einstellung des Magnetventils (1) zumindest während der Dauer von Schritt d) überwacht wird.

9. Verfahren nach einem der Ansprüche 7 oder 8, wobei eine Mehrzahl gleichartiger Schaltvorgänge durchgeführt wird, wobei der Ventilkörper (4) in einem nachfolgenden Schaltvorgang im zweiten Zeitintervall (12) verstärkt beschleunigt wird, sofern bei mindestens einem vorhergehenden Schaltvorgang in Schritt d) ein Umschalten des Magnetventils (1) erkannt wurde.

10. Verfahren nach einem der Ansprüche 7 bis 8, wobei eine Mehrzahl gleichartiger Schaltvorgänge durchgeführt wird, wobei der Ventilkörper (4) in einem nachfolgenden Schaltvorgang im zweiten Zeitintervall (12) geringer beschleunigt wird, sofern bei mindestens einem vorhergehenden Schaltvorgang in Schritt d) kein Umschalten des Magnetventils (1) erkannt wurde.

11. Steuergerät (15) zum Umschalten eines Magnetventils (1) mit einem Schaltstrom (8) nach einem Verfahren gemäß einem der vorhergehenden Ansprüche.

12. Computerprogramm, welches eingerichtet ist, alle Schritte des Verfahrens nach einem der Ansprüche 1 bis 10 auszuführen.

13. Maschinenlesbares Speichermedium, auf dem das Computerprogramm nach Anspruch 12 gespeichert ist.

## Claims

1. Method for switching over a solenoid valve (1) with a movable valve body (4) between a first position and a second position, wherein the method comprises at least the following method steps:
a) adjusting a switching current (8) to a pre-energization current intensity (I₁), in which the valve body (4) remains in the present position, for a first time interval (11), and
b) adjusting the switching current (8) to a first switchover current intensity (I₂), which initiates a switchover movement of the valve body (4), for a second time interval (12),
wherein the solenoid valve (1) can be switched over from the first position to the second position due to the presence of the switching current (8) with a current intensity above an upper limit current intensity (9), wherein the pre-energization current intensity (I₁) is below the upper limit current intensity (9).

2. Method according to Claim 1, wherein the length of the second time interval (12) is chosen in such a way that the switchover of the solenoid valve (1) has not yet been completed after the second time interval (12).

3. Method according to either of the preceding claims, further comprising the following method step:
c) adjusting the switching current (8) to a damping current intensity (I₃), which adjusts a speed of the switchover movement, for a third time interval (13).

4. Method according to Claim 1, wherein the pre-energization current intensity (I₁) amounts to at least 90% of the upper limit current intensity.

5. Method according to one of the preceding claims, wherein the solenoid valve (1) can be switched over from the second position to the first position due to the presence of the switching current (8) with a current intensity below a lower limit current intensity (10), wherein the pre-energization current intensity (I₁) is above the lower limit current intensity (10).

6. Method according to Claim 5, wherein the pre-energization current intensity (I₁) amounts to at most 110% of the upper limit current intensity.

7. Method according to one of the preceding claims, further comprising the following method step:
d) adjusting the switching current (8) to a second switchover current intensity (I₄), which ensures that a switchover of the solenoid valve (1) is carried out.

8. Method according to Claim 7, wherein a setting of the solenoid valve (1) is monitored at least for the duration of step d).

9. Method according to one of Claims 7 and 8, wherein a multiplicity of similar switching operations is performed, wherein in a subsequent switching operation the valve body (4) is accelerated at an increased rate in the second time interval (12) if a switchover of the solenoid valve (1) was detected in at least one previous switching operation in step d).

10. Method according to one of Claims 7 and 8, wherein a multiplicity of similar switching operations is performed, wherein in a subsequent switching operation the valve body (4) is accelerated at a lower rate in the second time interval (12) if no switchover of the solenoid valve (1) was detected in at least one previous switching operation in step d).

11. Control device (15) for switching over a solenoid valve (1) with a switching current (8) according to a method according to one of the preceding claims.

12. Computer program, which is configured to execute all the steps of the method according to one of Claims 1 to 10.

13. Machine-readable storage medium, on which the computer program according to Claim 12 is stored.

## Revendications

1. Procédé permettant de commuter une électrovanne (1) pourvue d'un corps de vanne mobile (4) entre une première position et une deuxième position, le procédé comprenant au moins les étapes de procédé suivantes consistant à :
a) régler un courant de commutation (8) sur une intensité de courant de préexcitation (I₁) à laquelle le corps de vanne (4) reste dans la position actuelle pour un premier intervalle de temps (11), et
b) régler le courant de commutation (8) sur une première intensité de courant de commutation (I₂) qui déclenche un mouvement de commutation du corps de vanne (4) pour un deuxième intervalle de temps (12),
dans lequel l'électrovanne (1) peut être commutée par la présence du courant de commutation (8) d'une intensité de courant au-dessus d'une intensité de courant limite supérieure (9) de la première position à la deuxième position, dans lequel l'intensité de courant de préexcitation (I₁) se situe au-dessous de l'intensité de courant limite supérieure (9).

2. Procédé selon la revendication 1, dans lequel le deuxième intervalle de temps (12) est dimensionné de telle sorte que la commutation de l'électrovanne (1) n'est pas encore terminée après le deuxième intervalle de temps (12).

3. Procédé selon l'une quelconque des revendications précédentes, comprenant en outre l'étape de procédé suivante consistant à :
c) régler le courant de commutation (8) sur une intensité de courant d'atténuation (I₃) qui adapte une vitesse du mouvement de commutation pour un troisième intervalle de temps (13).

4. Procédé selon la revendication 1, dans lequel l'intensité de courant de préexcitation (I₁) est au moins de 90 % de l'intensité de courant limite supérieure.

5. Procédé selon l'une quelconque des revendications précédentes, dans lequel l'électrovanne (1) peut être commutée par la présence du courant de commutation (8) d'une intensité de courant au-dessous d'une intensité de courant limite inférieure (10) de la deuxième position à la première position, dans lequel l'intensité de courant de préexcitation (I₁) se situe au-dessus de l'intensité de courant limite inférieure (10) .

6. Procédé selon la revendication 5, dans lequel l'intensité de courant de préexcitation (I₁) est au maximum de 110 % de l'intensité de courant limite inférieure.

7. Procédé selon l'une quelconque des revendications précédentes, comprenant l'étape de procédé suivant consistant à :
d) régler le courant de commutation de commutation (8) sur une deuxième intensité de courant de commutation (I₄) qui assure qu'une commutation de l'électrovanne (1) a eu lieu.

8. Procédé selon la revendication 7, dans lequel un réglage de l'électrovanne (1) est surveillé au moins pendant la durée de l'étape d).

9. Procédé selon l'une quelconque des revendications 7 ou 8, dans lequel une pluralité d'opérations de commutation de même type est exécutée, dans lequel le corps de vanne (4) est accéléré plus fortement dans une opération de commutation suivante dans le deuxième intervalle de temps (12) dans la mesure où une commutation de l'électrovanne (1) a été identifiée dans au moins une opération de commutation précédente à l'étape d).

10. Procédé selon l'une quelconque des revendications 7 à 8, dans lequel une pluralité d'opérations de commutation de même type est exécutée, dans lequel le corps de vanne (4) est accéléré moins fortement dans une opération de commutation suivante dans le deuxième intervalle de temps (12) dans la mesure où aucune commutation de l'électrovanne (1) n'a été identifiée dans au moins une opération de commutation précédente à l'étape d).

11. Appareil de commande (15) permettant de commuter une électrovanne (1) par un courant de commutation (8) selon un procédé selon l'une quelconque des revendications précédentes.

12. Programme informatique qui est conçu pour exécuter toutes les étapes du procédé selon l'une quelconque des revendications 1 à 10.

13. Support de stockage lisible par machine sur lequel est stocké le programme informatique selon la revendication 12.
